(19) **Europäisches Patentamt**
**European Patent Office**
**Office européen des brevets**

(11) Publication number: **0 335 100 B1**

(12) # EUROPEAN PATENT SPECIFICATION

(45) Date of publication of patent specification: **22.03.95**

(51) Int. Cl.⁶: **B29C 33/02**, B29C 33/56, B29C 70/42, B29C 43/52

(21) Application number: **89102930.8**

(22) Date of filing: **20.02.89**

(54) **Multilayer composite mold structure for molding on hot surfaces.**

(30) Priority: **30.03.88 US 175078**

(43) Date of publication of application:
**04.10.89 Bulletin 89/40**

(45) Publication of the grant of the patent:
**22.03.95 Bulletin 95/12**

(84) Designated Contracting States:
**DE FR GB IT NL**

(56) References cited:
**EP-A- 0 154 970**
**EP-A- 0 154 970**
**DE-A- 1 779 696**
**US-A- 3 804 362**

**PATENT ABSTRACTS OF JAPAN, vol. 6, no. 181 (M-156)[1059], 17th September 1982; & JP-A-57 89 929 (DAINIPPON INSATSU K.K.) 04-06-1982**

**PATENT ABSTRACTS OF JAPAN, vol. 9, no. 46 (M-360)[1769], 27th February 1985; & JP-A-59 185 617 (MITSUBISHI JUSHI K.K.) 22-10-1984**

**PATENT ABSTRACTS OF JAPAN, vol. 8, no.**

**220 (M-330)[1657], 6th October 1984; & JP-A-59 103 714 (SUMITOMO KAGAKU KOGYO K.K.) 15-06-1984**

(73) Proprietor: **GENERAL ELECTRIC COMPANY**
**1 River Road**
**Schenectady**
**New York 12305 (US)**

(72) Inventor: **Kim, Bang Mo**
**1505 Wheatly Court**
**Schenectady**
**New York 12309 (US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to mold structures for compression molding thermoplastics.

Compression molding of glass reinforced thermoplastic sheets is a promising method for producing relatively thin, wide and strong parts such as car hoods, doors and panels. One important prerequisite for the use of glass reinforced composite products in automobile applications is a Class A surface. While there is no universally accepted specification, the Class A surface is a glossy, smooth and polished surface which should be as smooth as that of current automobile exterior parts made from sheet metal.

Current molding processes of glass reinforced thermoplastic composite sheets begins with heating the composite blanks in an oven, typically in infrared or hot air convection ovens. The material is heated above its melting point or if an amorphous material at least substantially above its glass transition temperature. The hot blanks are then pressed between cool mold surfaces (surfaces lower than the melting point or the glass transition temperatures), which are typically 79-121 °C (175°-250°F). A molding pressure of 7.72 to 30.89 MPa (one half ton/sq. in. to two tons/sq. in.) is applied to the mold during a typical cycle time of 45-60 seconds.

When the composite blanks are heated, they expand (loft) due to the recoil forces within the fibers. The surface of the expanded blanks then cools during its transfer to the mold, resulting in "frozen" resins on the surface. Compression of this blank in the cool mold produces surfaces which are not completely filled with resins, although some hot molten material moves from the inner core to the surface. This creates unfilled areas in the form of exposed fibers and surface porosity or voids. Since the resin at the cold surface is frozen and does not flow, rough boundaries between charged and newly formed areas are also produced. These exposed fibers, porous areas and blank boundaries are the major manifestations of surface roughness, although other physical processes, such as differential thermal shrinkage between fibers and resins, can also result in surface roughness and/or waviness.

Recently it has been found that smooth surfaces can be obtained from neat resin in blow molding by using hot surface molding. The resin is supplied hot to the mold as a parison in blow molding. These techniques, which are based on temperature cycling of mold surfaces using heating and cooling fluids, increase the cycle time of the process and resume very complex control schemes which are the major disadvantage of these techniques. These techniques have been demonstrated only for blow molding neat resins.

Compression molding of composite sheets is much different from blow molding of neat resins. Heating of composite sheets causes the fibers to loft producing exposed fibers at the surfaces. Attempts to obtain smooth surfaces with composite sheets have involved trying to change the structure of the composite sheets so that the outside layers on the composite sheets have neat resin with barrier layers sometimes being provided to prevent the fibers situated in the middle layers from coming to the surface. These sheets could then be molded using conventional compression molding techniques.

EP-A-0154970 discloses a mold conforming to the preamble of the claim for producing identification cards which includes a press for glueing a number of foil sheets together, having a lower press and an upper press. Each press is provided with a heating element, which is formed as a heating resistance element, and an insulation layer which is placed between the heating element and a metallic block which forms a portion of each press, to which a pressing force is applied. Each metallic block is cooled in cooperation with the insulation layer so that its temperature during the glueing and cooling process remains constant.

US-A-3804362 discloses a mold for rapidly molding material where the material initially requires a warm mold and the mold to be thereafter rapidly cooled for rapid hardening of the material, said mold comprising Peltier elements for heating or cooling the plastic in the mold depending on the current direction in the Peltier elements.

It is an object of the present invention to provide a multilayer composite mold which can be used in current molding systems without major modifications, and can compression mold reinforced thermoplastic composite sheets into finished products that have smooth surfaces, a minimum of exposed fiber, porosity, and blank boundaries.

It is a further object of the present invention to provide a multilayer composite mold which reduces the required molding pressure and therefore reduces press size, which is particularly significant in large part fabrication.

It is a still further object of the present invention to provide a multilayer composite mold which results in short cycle times and therefore increased throughput for each molding operation.

The present invention provides a mold comprising two mold halves for compression molding preheated thermoplastic resin into finished parts, wherein each mold half is multilayered and comprises a core having a surface with a shape conforming to the contour of the part to be molded and passages for coolant; an insulating layer bonded to the contoured surface of the core for slowing initial cooling of the preheated thermoplastic resin during molding, and a skin layer bonded to the insulating layer defining the mold surface and surface characteristics and having a shape that follows the contour of the part to be molded, characterized in that, between the insulating layer and the core are located a plurality of thermoelectric couples electrically connected in series, each comprising P type and N type semiconductors, and means for supplying direct current to the couples in alternate directions for respectively heating and cooling the skin layer.

The invention may be best understood by reference to the following description taken in conjunction with the accompanying drawing figures in which:

Figure 1 is a partial side elevation, partly in section, of multilayer upper and lower mold halves;

Figure 2 shows the mold halves of Figure 1 with a sectional view of a thermoplastic composite sheet situated between the mold halves;

Figure 3 is a graph showing the calculation of transient heat transfer through the multilayer structure of the molding system beginning with mold closing;

Figure 4 is a graph showing the calculation of transient heat transfer for the multilayer system of Figure 3, beginning with mold closing when the metal skin layer of the mold is preheated;

Figure 5 is a graph showing the temperature at the surface of a composite shortly after the mold closing for three different molds, a pre-heated skin on an insulation layer, a cool skin on an insulation layer and a cool mold without an insulation layer, with the mold cooled to 107°C (225°F);

Figure 6 is a graph showing the temperature of the centerline of the composite material in each of the three molds of Figure 5 10 to 60 seconds after molding;

Figure 7 is a graph showing the temperature at the surface at a composite in the three molds of Figure 5 when the mold is cooled to 79°C (175°F);

Figure 8 is a graph showing the centerline temperature of the composite material 10 to 60 seconds after mold closing for the three molds of Figure 5 when the mold temperature is maintained at 79°C (175°F);

Figure 9 is a partial side elevation in section of multilayer upper and lower mold halves in accordance with an embodiment of the present invention;

Figure 10 shows the mold halves of Figure 9, with a sectional view of a thermoplastic composite sheet situated between the mold halves after mold closing;

Figure 11 is a partial side elevation, in section of multilayer upper and lower mold halves in accordance with another embodiment of the present invention; and

Figure 12 shows the mold halves of Figure 11, with a sectional view of a thermoplastic composite sheet after mold closing.

Detailed Description of the Invention

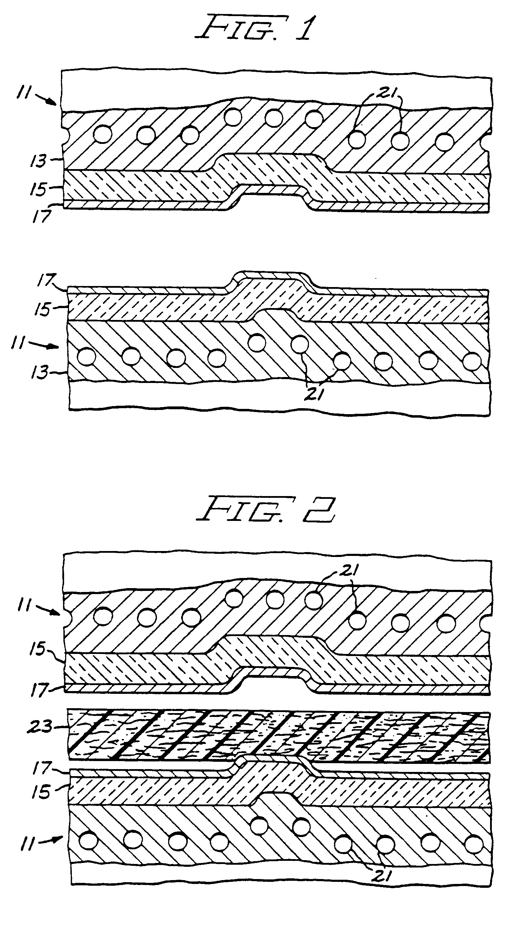

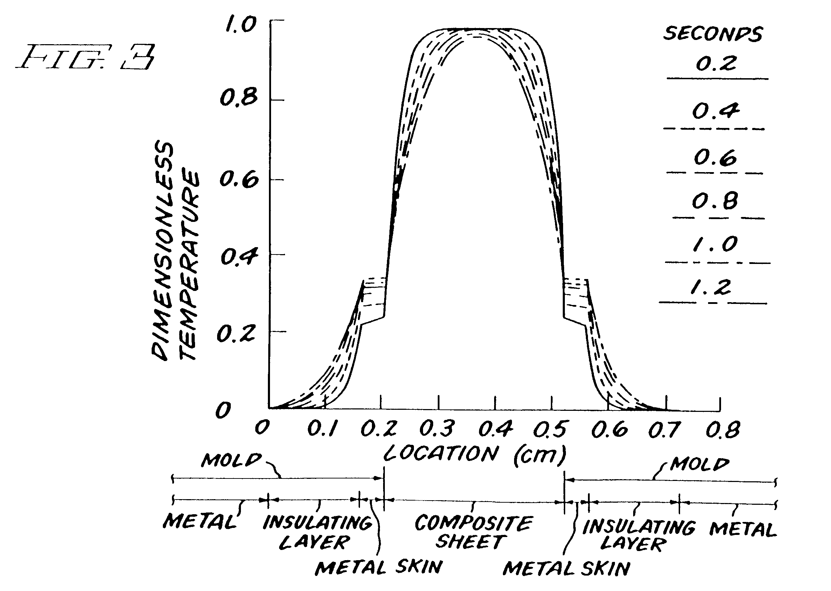

Referring now to the drawing wherein like numerals indicate like elements throughout and particularly Figures 1 and 2 thereof, a partial side elevation of a multilayer mold is shown. Each of the mold halves 11 comprises a core of high thermal conductivity material 13, the mating mold surfaces are covered by a thin thermal insulating layer 15. The thermal insulating layer can be fabricated from low thermal conductivity material such as plastics, plastic composites, porous metals, ceramics and low conductivity metal alloys. Other low thermal conductivity materials, which are used for insulation could also be used. A hard skin layer 17 covers the insulating layer. The hard skin layer comprises a thin layer of smooth hard metal, ceramic or other hard solid, which provides the necessary mechanical strength while imparting a smooth surface to the object molded. The hard skin layer 17 and insulating layer 15 can be applied, for example, by lamination, deposition or sintering. The high conductivity core material 13 provides good heat transfer to and from the insulating layer. The core material is cooled by means of passages 21 which can carry cooling liquids. The core material can comprise tool steel, but softer less expensive metals such as aluminum can alternatively be used. The core portion of the mold halves do not come into contact with the composite material 12 being molded, therefore they are not subject to wear by the material being molded.

One method of fabricating the multilayer mold comprises making a replica of the part to be molded out of graphite or metal. The two metal core halves are machined to the contour of the replica part. A hard skin layer is produced by chemical vapor deposition or plasma deposition of 0.25-2.54 mm (10-100 mils) of metal on the graphite part. The mold halves are positioned on either side of the graphite part, spaced away to leave a space for the insulating layer. The space is then used as a mold cavity for high temperature plastic composite, or forming and sintering of a porous metal or ceramic. The graphite replica is then removed and two multilayer mold halves remain. Another method is to produce asymmetric ceramic composites, having high density material at the surface and porous materials for the rest of the insulating layer.

Molding on hot surfaces significantly reduces surface imperfections on compression molded parts of composite materials having fiber contents of 30 to 40%. The insulating layer allows molten plastic contacting the insulating layer through the thin metal skin to remain hot and cool slowly. This results in a hot plastic surface for a short period of time. If the molten plastic is compressed, the resin fills the mold surfaces completely, resulting in a smooth surface finish.

To provide a high resin surface temperature after contact with the cold mold surface, preheating of the plastic to as high a temperature as possible is required. If sufficient heat can be supplied to the plastic, it is not necessary to heat the mold surface. Therefore, a smooth surface can be produced by using an insulating layer without any additional heating of the mold surface. However, slight preheating of the mold surface layer may be required to process a plastic having a high glass transition temperature or a high melting point or to provide more flow of the resin at the same pressure. Preheating of the mold surface can be accomplished by infrared, electric current, solid conduction, induction, radio frequency, microwave or thermal fluid heating, for example. The thickness of both the hard solid skin layer and the low thermal conductivity layer are determined by cycle time, mechanical strength and preheat temperature of the plastic. The preferred structure of the multilayer mold is with the skin layer and low thermal conductivity layer permanently attached to the core. However, each layer can be made detachable from the core or from one another.

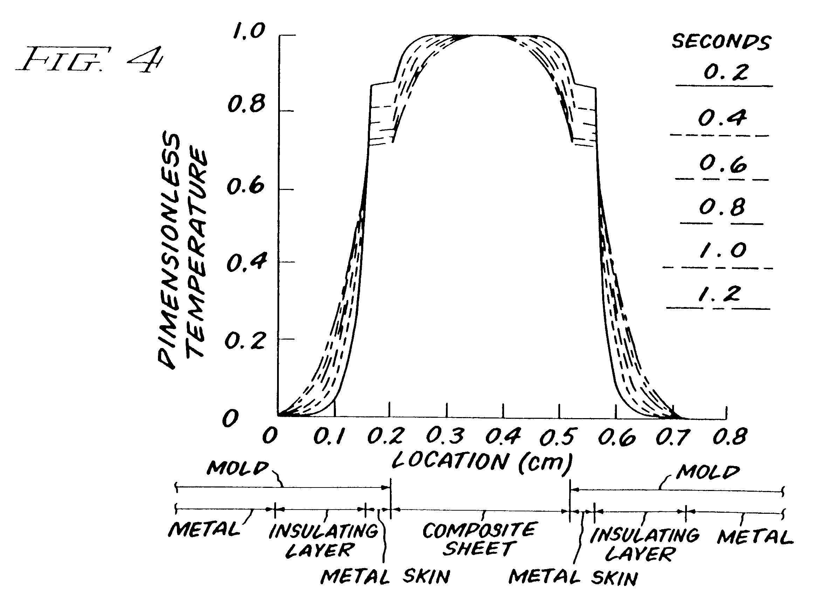

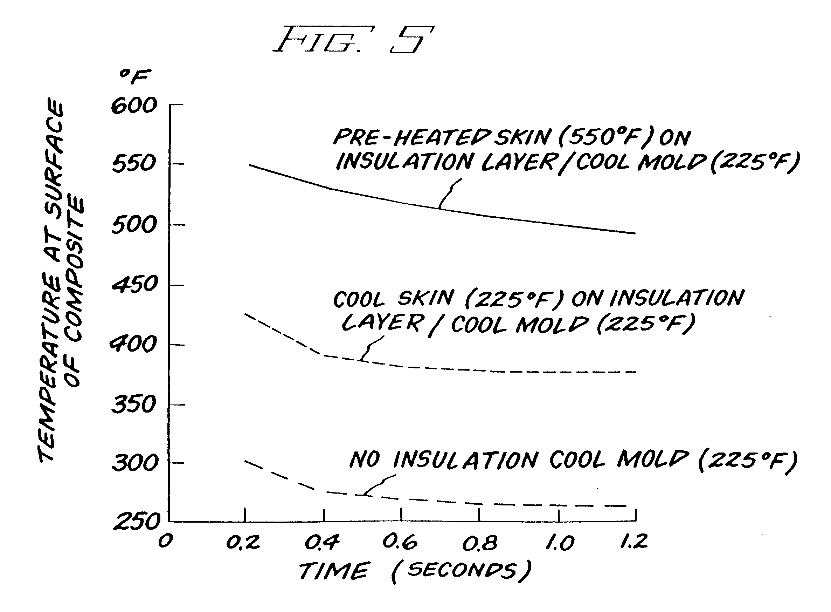

Transient heat transfer calculation of multilayer systems simulating compression molding of composite sheets on insulated mold surfaces without preheating of the skin layer is shown in Figure 3. The multilayer structure analyzed comprises seven layers: a metal core, a 1.59 mm (sixteenth of an inch) insulating layer, a 0.40 mm (sixty-fourth of an inch) metal skin layer, an 3.17 mm (eighth inch) composite, a 0.40 mm (sixty-fourth of an inch) metal skin layer, a 1.59 mm (sixteenth of an inch) insulating layer and a metal core. The graph uses dimensionless temperature as the ordinate axis. Dimensionless temperature is defined as the ratio $(T-T_c)/(T_i-T_c)$, where $T$, $T_i$ and $T_c$ stand for temperature as a function of time and location, initial temperature, and boundary condition temperature, respectively. For example, a constant temperature of 107°C (225°F) provided at 6.35 mm (one quarter inch) from the mold surface such as by the use of a cooling fluid flowing in the core. It is shown that the temperature of the skin layer initially increases due to the heat from the preheated composite sheet. Surface cooling occurs slowly and the temperature of the plastic resin at the surface allows the resin to flow and fill voids, exposed fibers, and porous areas. Preheating the skin layer to 288°C (550°F) as shown in the graph of Figure 4 will increase the surface temperature of the composite after initial contact with the mold surface.

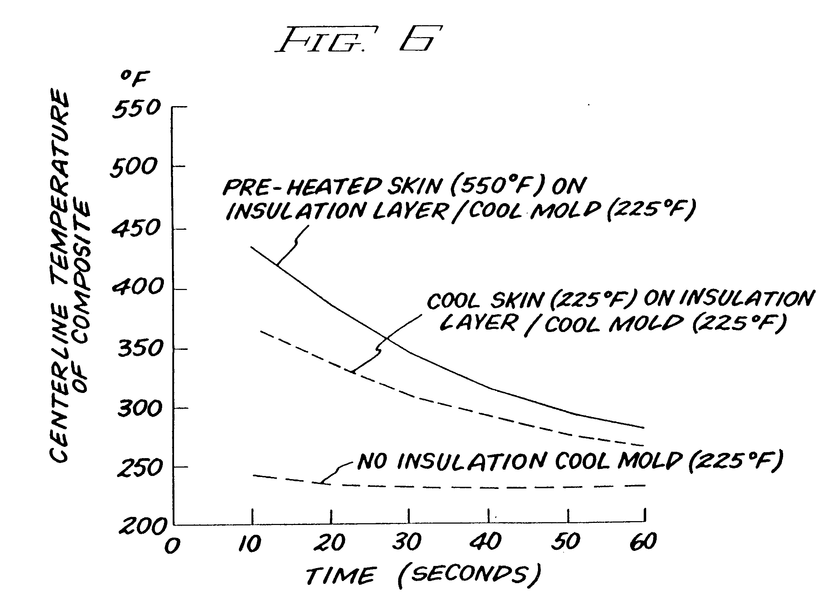

Figure 5 shows the temperature at the surface of the composite just after molding for three different situations, a mold without an insulation layer, a mold with an insulation layer and an unheated metal skin, and a mold with an insulation layer and a preheated skin. The dimensions of the mold insulating layer, skin layer and composite layer are the same as Figures 3 and 4. The molds in each of these cases are cooled to 107°C (225°F) and the composite material is heated to 288°C (550°F). The preheated skin was also heated to 288°C (550°F). While immediate cooling at the surface occurs in the case without an insulator, a higher temperature was maintained with an insulator and an unheated metal skin. It indicates that the resin with a glass transition temperature lower than 177°C (350°F) will fill the mold surfaces, producing smooth surfaces without preheating of the skin layer. Preheating of the metal skin can increase the mold temperature to any desired initial amount.

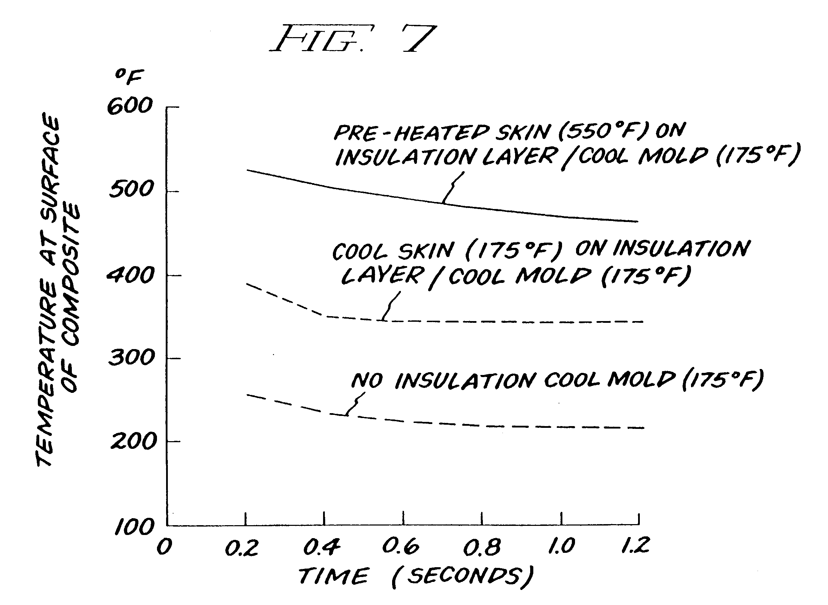

Referring now to Figure 6, the temperature of the centerline of the composite material of Figure 5 is shown from 10 to 60 seconds after molding. The cooling is quicker with cool skin than with preheated skin. With a preheated skin on an insulating layer in a 107°C (225°F) mold and with the mold with the cool skin on an insulating layer in a 107°C (225°F) mold, the interior of the composite sheet does not cool below 121°C (250°F) in less than 60 seconds. A composite sheet with a matrix material having a glass transition temperature of 121°C (250°F) would not be sufficiently cool to allow removal from the mold.

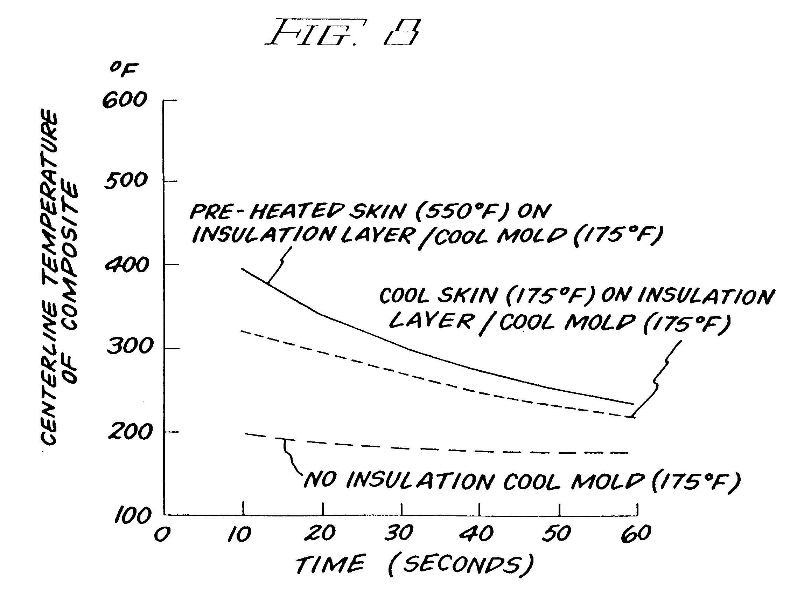

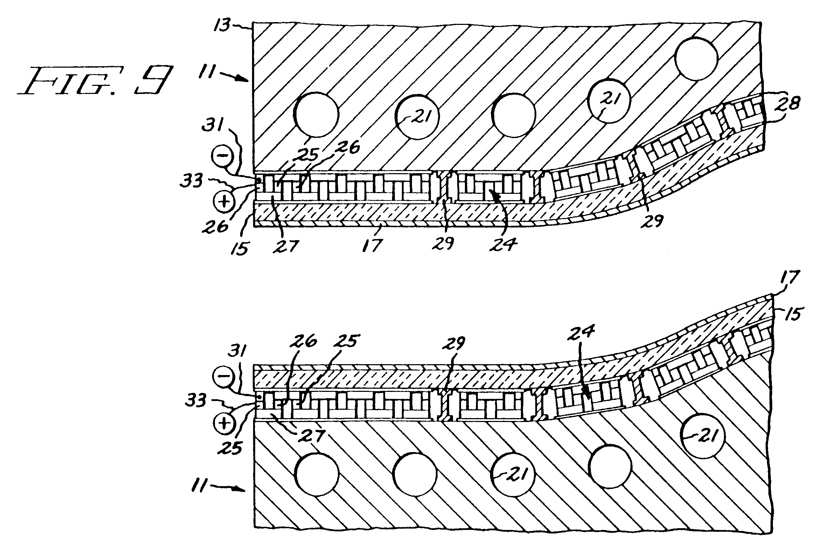

Referring to Figures 7 and 8, when the molds in the graphs of Figures 5 and 6 are cooled to 79°C (175°F), 6.35 mm (one quarter of an inch) from the insulating layer and the composite again heated to 288°C (550°F,) the mold surface is maintained higher than 177°C (350°F) for initial 1.2 seconds when insulators are used and the time required for the centerline of the composite to cool below the glass transition temperature of 121°C (250°F), is less than a minute for the preheated and cold skin layer on an insulating layer molds.

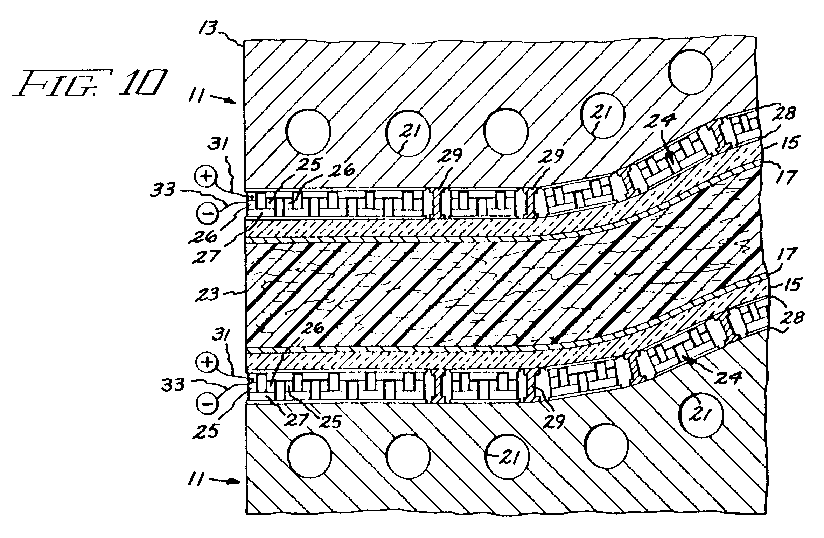

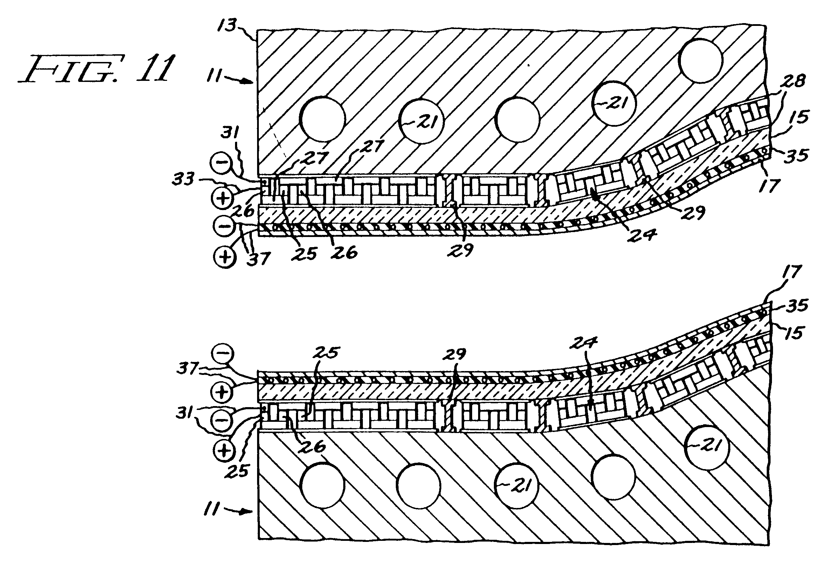

Referring now to Figures 9 and 10 thermoelectric couples 24 which operate by means of the Peltier effect to reversibly generate heat at the junction between two different conductors when a current passes through the junction, are shown as an additional layer in the mold of the type described in Figure 1. The thermoelectric couples are made from P type 25 and N type semiconductors 26 which are connected together by electrical conductors 27 in series and arranged between a ceramic plate insulator 28 so that the couples are in parallel thermally. The exterior faces of the ceramic plate insulators are typically metallized and tinned. The thermoelectric couples are situated between the core 13 and the insulating layer 15. Reinforcing ribs 29 are shown between the thermoelectric couples to improve the compression strength of the mold and protect the modules from excessive compressive forces. The couples are electrically connected to a power source with leads 31 and 33 shown exiting each half of the mold. Individual couples allow the thermoelectric device layer to generally follow the contour of the mold. Thermoelectric couples are available from Melcor Materials Electronic Products Corporation, Trenton, New Jersey, for example.

In operation, before the composite material is placed in the mold shown in Fig. 9, the polarity of the direct current supplied to the mold causes the couples 24 to achieve a temperature gradient across the couples with the warm junction situated adjacent the insulating layer 15. The insulation layer protects the thermoelectric couples from heat given off from the hot composite sheet when it is placed in the mold. The hot composite sheet temperature typically exceeds the maximum operating temperature of the connected thermoelectric couple which is approximately $127\,^{\circ}\text{C}$ ($260\,^{\circ}\text{F}$).

Referring now to Figure 10, a short time after mold closing, when the molten plastic has ceased flowing, typically one second, the current through the thermoelectric couples is reversed, to reverse the temperature gradient across the couples to help in cooling the composite sheet and achieving a calculated cooling time of less than one minute for a 3.17 mm (1/8 inch) composite sheet.

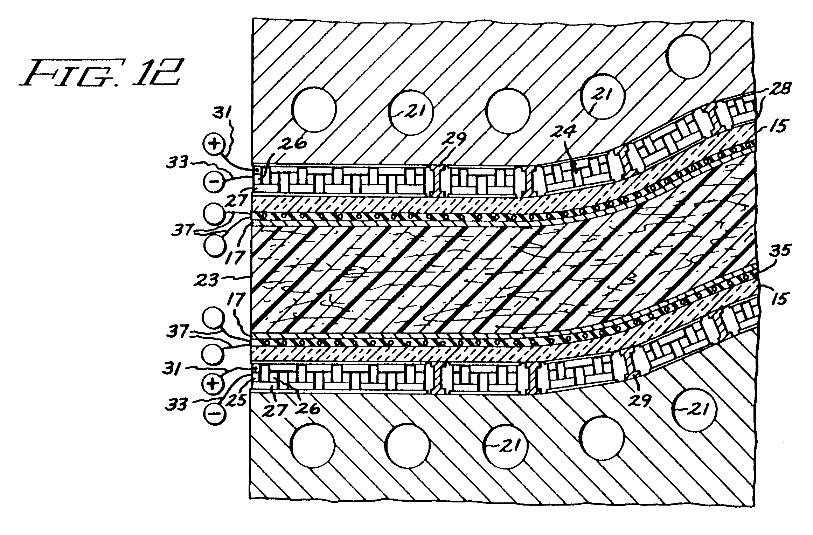

Figure 11 shows another embodiment of the present invention. A mold of the type shown in Figure 9 has an additional layer comprising Joule or resistance heating material 35 situated between the insulating layer 15 and the outer skin layer 17 to achieve a preheated skin at elevated temperatures. Leads 37 extend from the resistance heating material. The thermoelectric couples 24 and resistance heating 35 can both operate during the preheat stage and continue for a short time after the preheated composite is placed between the mold halves and the mold closes. Shortly after the mold closes, as shown in Figure 11, the power to the resistance heater is turned off, and the polarity of the current supplied to the thermoelectric couples is reversed. The thermoelectric couples then aid in cooling the composite part. Preheating allows for the composite flow at reduced pressure or greater composite flow at the same pressure. The insulating layer 15 protects the thermoelectric couples during preheating by retarding heat transfer across the insulating layer. The flow of the cooling water may be continued for the entire cycle.

If desired in the embodiments of Figures 8, 9 and 10 and 11, the flow of cooling fluid through the mold can be discontinued before the composite is placed in the press and started again after mold closing.

The skin layer in the different embodiments should have a thermal conductivity in the range of $4.18 \times 10^{-2}$ to $4.18 \times 10^{-1}$ J/cm$^2$ s. $^{\circ}$C/cm ($1 \times 10^{-2}$ to $1 \times 10^{-1}$ cal/cm$^2$ s. C/cm) and a thickness of 0.025-0.25 cm (10 mil to 100 mil). The symbol C represents temperature in centigrade. The insulating layer should have a thermal conductivity of $20.9 \times 10^{-3}$ to $4.18 \times 10^{-4}$ J/cm$^2$ s C/cm ($5 \times 10^{-3}$ to $1 \times 10^{-4}$ cal/cm$^2$ s C/cm).

The core of the multilayer mold has a thickness of 0.5 cm. - 5 cm. (0.2 in. - 2 in.) between the insulating layer and the cooling fluids and a range of conductivities the same as the skin layer $4.18 \times 10^{-2}$ to $4.18 \times 10^{-1}$ J/cm$^2$ s C/cm ($1 \times 10^{-2}$ - $1 \times 10^{-1}$ cal./in.$^2$ sec. C/cm).

The foregoing has described a multilayer composite mold for compression molding thermoplastic which can be used in current molding systems without major modification and can compression mold reinforced thermoplastic composite sheets into finished products that have smooth surfaces, a minimum of exposed fiber, porosity, and blank boundaries. The multilayer composite mold of the present invention reduces the required molding pressure and reduces cycle time.

**Claims**

1. A mold comprising two mold halves for compression molding preheated thermoplastic resin into finished parts, wherein each mold half (11) is multilayered and comprises,

a core (13) having a surface with a shape conforming to the contour of the part to be molded and passages (21) for coolant;

an insulating layer (15) bonded to the contoured surface of the core (13) for slowing initial cooling of the preheated thermoplastic resin during molding; and

a skin layer (17) bonded to the insulating layer (15) defining the mold surface and surface characteristics and having a shape that follows the contour of the part to be molded,

characterized in that, between insulating layer (15) and core (13) are located a plurality of thermoelectric couples (24) electrically connected in series, each comprising P type (25) and N type (26) semiconductors, and means for supplying direct current to couples (24) in alternate directions for respectively heating and cooling the skin layer (17).

## Patentansprüche

1. Eine Form, die zwei Formhälften umfaßt, zum Formpressen von vorerhitztem thermoplastischem Harz zu Endproduktteilen, bei der jede Formhälfte (11) mehrschichtig ist und einen Kern (13), der eine Oberfläche mit einer Gestalt, die den Umrissen des auszuformenden Teiles in der Form angepaßt ist, und Durchgangswege (21) für Kühlmittel aufweist; eine isolierende Schicht (15), die an die konturmäßige Oberfläche des Kerns (13) gebunden ist, die anfängliches Kühlen des vorerhitzten thermoplastischen Harzes während des Formvorgangs verlangsamt; und eine Hautschicht (17), die an die isolierende Schicht (15) gebunden ist und die Formenoberfläche und die Oberflächeneigenschaften bestimmt und eine Gestalt aufweist, die der Kontur des auszuformenden Teiles folgt, umfaßt, dadurch gekennzeichnet, daß zwischen der isolierenden Schicht (15) und dem Kern (13) eine Vielzahl von Thermoelementen (24), die elektrisch in Reihe geschaltet sind, wobei jedes Halbleiter vom P-Typ (25) und vom N-Typ (26) umfaßt, und Einrichtungen zum Zuführen von Gleichstrom an die Thermoelemente (24) in abwechselnden Richtungen gelegen sind, um die Hautschicht (17) jeweils entsprechend zu heizen und zu kühlen.

## Revendications

1. Moule comprenant deux moitiés de moule, destiné au moulage par compression d'une résine thermoplastique préchauffée pour donner des pièces finies, dans lequel chaque moitié de moule (11) est faite de couches multiples et comprend :
   - une âme (13) comportant une surface, dont la forme correspond au contour de la pièce à mouler, et des passages (21) pour un fluide de refroidissement,
   - une couche isolante (15) fixée à la surface mise en forme de l'âme (13) pour ralentir le refroidissement initial de la résine thermoplastique préchauffée lors du moulage, et
   - une couche superficielle (17) fixée à la couche isolante (15), définissant la surface et les caractéristiques de surface du moule et ayant une forme qui suit le contour de la pièce à mouler,
   caractérisé en ce que, entre la couche isolante (15) et l'âme (13), se trouvent situées une pluralité de couples thermoélectriques (24), branchés en série du point de vue électrique, comprenant chacun des semi-conducteurs de type p (25) et de type n (26), et des moyens pour fournir un courant continu aux couples (24) dans des sens alternés afin de respectivement chauffer et refroidir la couche superficielle (17).

*FIG. 1*

*FIG. 2*

FIG. 3

FIG. 4

PIMENSIONLESS TEMPERATURE

SECONDS
0.2
0.4
0.6
0.8
1.0
1.2

LOCATION (cm)

MOLD

METAL    INSULATING    COMPOSITE    INSULATING   METAL
         LAYER          SHEET         LAYER

MOLD

METAL SKIN    METAL SKIN

EP 0 335 100 B1

FIG. 5

°F

PRE-HEATED SKIN (550°F) ON
INSULATION LAYER/COOL MOLD (225°F)

COOL SKIN (225°F) ON INSULATION
LAYER / COOL MOLD (225°F)

NO INSULATION COOL MOLD (225°F)

TEMPERATURE AT SURFACE OF COMPOSITE

TIME (SECONDS)

EP 0 335 100 B1

FIG. 6

PRE-HEATED SKIN (550°F) ON INSULATION LAYER / COOL MOLD (225°F)

COOL SKIN (225°F) ON INSULATION LAYER / COOL MOLD (225°F)

NO INSULATION COOL MOLD (225°F)

CENTERLINE TEMPERATURE OF COMPOSITE

°F
550
500
450
400
350
300
250
200

TIME (SECONDS)
0   10   20   30   40   50   60

FIG. 7

PRE-HEATED SKIN (550°F) ON
INSULATION LAYER / COOL MOLD (175°F)

COOL SKIN (175°F) ON INSULATION
LAYER / COOL MOLD (175°F)

NO INSULATION COOL MOLD (175°F)

°F

TEMPERATURE AT SURFACE
OF COMPOSITE

TIME (SECONDS)

EP 0 335 100 B1

FIG. 8

PRE-HEATED SKIN (550°F) ON
INSULATION LAYER /COOL MOLD (175°F)

COOL SKIN (175°F) ON INSULATION
LAYER / COOL MOLD (175°F)

NO INSULATION COOL MOLD (175°F)

°F (CENTERLINE TEMPERATURE OF COMPOSITE vs TIME (SECONDS))

EP 0 335 100 B1

FIG. 9

FIG. 10

FIG. 11

FIG. 12